# EUROPEAN PATENT APPLICATION

(11) **EP 4 729 365 A1**
(43) Date of publication of application: **22.04.2026**
(21) Application number: 23940943.6
(22) Date of filing: 14.06.2023
(51) Int. Cl.: B60R 16/02, B60K 1/00, B60K 1/04

(54) **HARNESS ATTACHMENT STRUCTURE**

(71) Applicant: Nissan Motor Co., Ltd., Yokohama-shi, Kanagawa 220-8623 (JP)
(72) Inventor: EGUCHI, Kazuki, Atsugi-shi, Kanagawa 243-0123 (JP); NAKAO, Satoshi, Atsugi-shi, Kanagawa 243-0021 (JP)
(74) Representative: Hoefer & Partner Patentanwälte mbB
(86) International application number: PCT/JP2023/022104
(87) International publication number: WO 2024/257272

(57) **Abstract**

A harness attachment structure in a vehicle is provided. The vehicle includes a drive unit configured to drive the vehicle and a battery unit configured to supply power to the drive unit via a harness. The drive unit is disposed on a vehicle rear side relative to the battery unit and includes a drive motor configured to drive a driving wheel and an inverter unit configured to convert power of the battery unit and supply the converted power to the drive motor. The harness includes one end configured as the first connection portion that is connected to the battery unit toward a vehicle front side at a rear portion of the battery unit, and the other end configured as the second connection portion that is connected to the inverter unit in a vehicle width direction at a side portion of the inverter unit. The harness is routed to curve at least in the vehicle width direction between the first connection portion and the second connection portion.

## Description

### TECHNICAL FIELD

The present invention relates to a harness attachment structure.

### BACKGROUND ART

An electric vehicle uses an inverter unit to convert power supplied by a battery into power suitable for driving a drive motor and travels by the drive motor.

JP2016-159816A discloses a configuration in which, in a configuration in which an inverter unit attached to a suspension member and a battery pack attached to a side member are electrically connected via a high-voltage harness, the high-voltage harness connected to an inverter-side connector extends in a vehicle width direction intersecting a vehicle front-rear direction.

### SUMMARY OF INVENTION

When the vehicle travels, the inverter unit attached to the suspension member swings, causing the high-voltage harness to swing. In the above patent literature, the high-voltage harness is arranged between the battery pack and the inverter unit. However, since there is little space between the battery pack and the inverter unit, it is not easy to provide a sufficient margin length for the high-voltage harness. For this reason, there is a problem that it is difficult to cope with swinging of the high-voltage harness.

The present invention has been made in view of such a problem, and an object of the present invention is to provide a harness attachment structure capable of providing a margin in a length of a harness.

In an embodiment of the present invention, provided is a harness attachment structure in a vehicle, the vehicle including a drive unit configured to drive the vehicle and a battery unit configured to supply power to the drive unit via a harness. The drive unit is disposed on a vehicle rear side relative to the battery unit and includes a drive motor configured to drive a driving wheel and an inverter unit configured to convert power of the battery unit and supply the converted power to the drive motor. The harness includes one end configured as the first connection portion that is connected to the battery unit toward a vehicle front side at a rear portion of the battery unit, and the other end configured as the second connection portion that is connected to the inverter unit in a vehicle width direction at a side portion of the inverter unit. The harness is routed to curve at least in the vehicle width direction between the first connection portion and the second connection portion.

### BRIEF DESCRIPTION OF DRAWINGS

[FIG. 1] FIG. 1 is an explanatory diagram of an electric vehicle according to an embodiment of the present invention.
[FIG. 2] FIG. 2 is an explanatory diagram of a rear drive unit.
[FIG. 3] FIG. 3 is an explanatory diagram of the rear drive unit.
[FIG. 4] FIG. 4 is an explanatory diagram of a first bracket.
[FIG. 5] FIG. 5 is an explanatory diagram of a second bracket.
[FIG. 6] FIG. 6 is a top view of the rear drive unit.
[FIG. 7] FIG. 7 is a top view of a vehicle cabin.

### DESCRIPTION OF EMBODIMENTS

Hereinafter, an embodiment of the present invention will be described with reference to the drawings or the like.

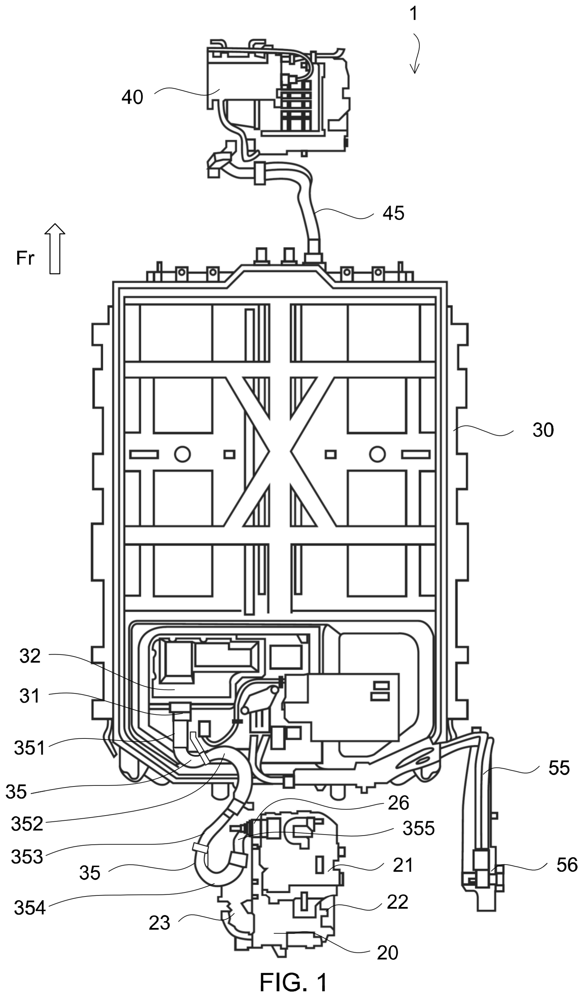

FIG. 1 is an explanatory diagram of an entire drive system of an electric vehicle 1 on which a rear drive unit 20 according to the embodiment of the present invention is mounted.

The electric vehicle 1 (hereinafter, vehicle 1) includes the rear drive unit 20, a battery unit 30, and a front drive unit 40.

The rear drive unit 20 is disposed on a vehicle rear side relative to the battery unit 30. A harness 35 for supplying DC power of the battery unit 30 is connected to the rear drive unit 20.

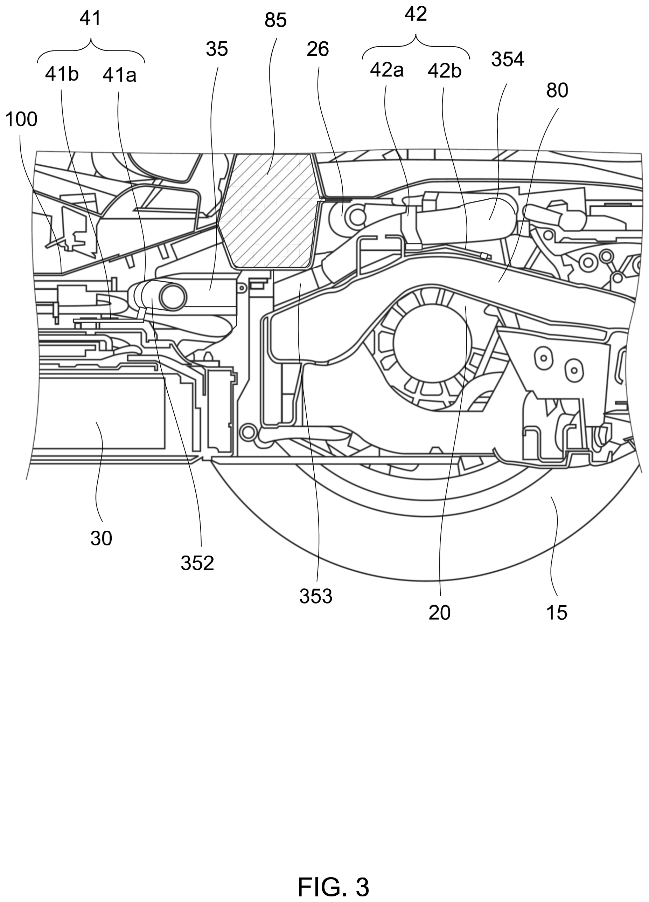

The rear drive unit 20 is configured as an electric powertrain integrally including an inverter unit 21, a drive motor 22, and a speed reducer 23. The rear drive unit 20 drives the vehicle 1 by driving the drive motor 22 based on power supplied from the battery unit 30 to rotate a driving wheel 15 (see FIG. 3).

The inverter unit 21 converts the power supplied from the battery unit 30 into power suitable for driving the drive motor 22 and supplies the converted power to the drive motor 22.

The drive motor 22 includes a rotating electric machine such as a permanent magnet embedded synchronous motor or a field winding type synchronous motor.

The speed reducer 23 includes a plurality of gears that reduce a speed of rotation of the drive motor 22 and transmit the rotation to an axle. The speed reducer 23 may be configured as a transmission capable of switching a plurality of gear positions stepwise or steplessly.

The battery unit 30 is disposed on a floor between a front wheel and a rear wheel of the vehicle 1. The battery unit 30 includes a plurality of battery modules therein. The harness 35 is connected to a rear portion of the battery unit 30. A charging port 56 and a charging cable 55 for charging a battery are provided on a right rear side of the battery unit 30.

The harness 35 includes a pair of positive and negative conductive wires obtained by applying an insulating coating to a conductor made of copper, aluminum, or the like. The harness 35 is connected to the inverter unit 21 and the battery unit 30.

The front side (motor room) of the vehicle 1 is provided with the front drive unit 40 that drives a front wheel. Similar to the rear drive unit 20, the front drive unit 40 includes a drive motor and an inverter unit that supplies power to the drive motor. A front harness 45 for supplying power is connected between the front drive unit 40 and the battery unit 30.

Next, the harness 35 disposed between the rear drive unit 20 and the battery unit 30 will be described.

When the vehicle 1 travels, the rear drive unit 20 swings relative to the battery unit 30 fixed to a vehicle body due to vibration input from a road surface via a suspension or the like, vibration of the rear drive unit 20 itself, or the like. It is desirable that the harness 35 connected to the rear drive unit 20 has a margin length for allowing the swinging in order to prevent deformation or damage due to stress caused by the swinging.

Further, the battery unit 30 is disposed in front of the rear drive unit 20, and a floor panel 100 is present directly above the battery unit 30 (see FIG. 3). In this way, at the rear of the vehicle 1, the rear drive unit 20 and the battery unit 30 are disposed close to each other in a vehicle front-rear direction, and there is no sufficient margin in a space between the rear drive unit 20 and the battery unit 30 in view of layout. A cross member 85 extending in a vehicle width direction is also disposed between the rear drive unit 20 and the battery unit 30 (see FIG. 3). Therefore, a contrivance is required to arrange the harness 35 such that the harness 35 has a margin length. Further, since the harness 35 is a relatively thick conductive wire that allows a voltage (for example, DC 400 V) of the battery unit 30 to flow therethrough, the harness 35 has low flexibility and needs to have a large margin length to allow for swinging.

In the present embodiment, a configuration to be described below provides a margin length for the harness 35 to swing.

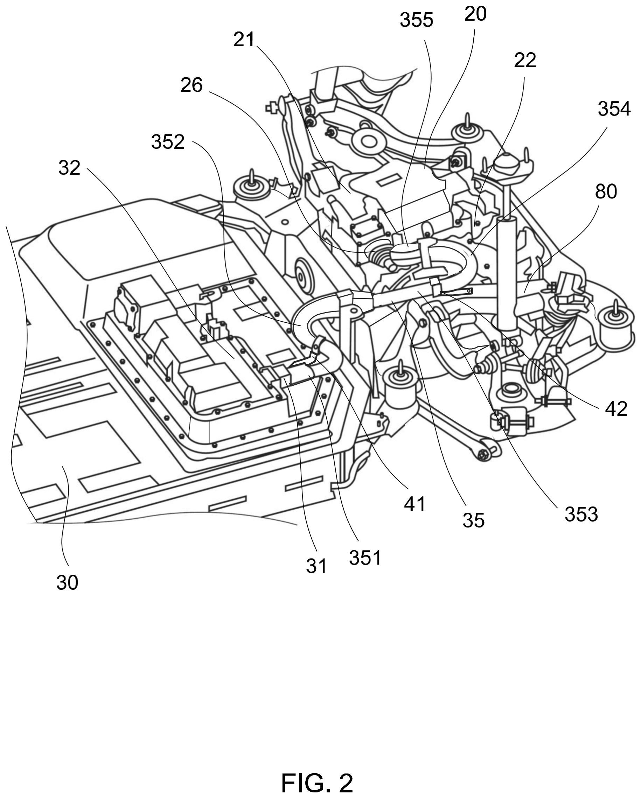

FIG. 2 is a perspective view of a rear part of the vehicle around the rear drive unit 20 of the present embodiment.

A pair of suspension members 80 extending in the vehicle front-rear direction are disposed on left and right sides of the rear drive unit 20. The suspension member 80 supports the inverter unit 21, the drive motor 22, and the speed reducer 23 that are integrally formed.

One end of the harness 35 is configured as a first connection portion 351 connected to a battery-side connector 31 of the battery unit 30. The battery unit 30 has an erected portion 32 formed on an upper surface of the rear portion thereof, the erected portion 32 being erected at a position biased toward a left side in a vehicle width direction. The battery-side connector 31 is disposed on a rear end surface of the erected portion 32. The first connection portion 351 of the harness 35 is connected to the battery-side connector 31 toward a vehicle front side.

The other end of the harness 35 is configured as a second connection portion 355 connected to an inverter-side connector 26 of the inverter unit 21. The inverter-side connector 26 is disposed on a left side portion of the inverter unit 21. The second connection portion 355 of the harness 35 is connected to the inverter-side connector 26 toward a right side in the vehicle width direction. The battery-side connector 31 is positioned further to the left in the vehicle width direction than the inverter-side connector 26.

In this way, the harness 35 is connected to the battery-side connector 31 disposed on the left side of the battery unit 30 and the inverter-side connector 26 disposed on the left side of the rear drive unit 20.

The harness 35 is configured to be curved in a left-right direction between the first connection portion 351 and the second connection portion 355, that is, in a space between the rear of the battery unit 30 and the side of the rear drive unit 20 in the vehicle width direction.

Specifically, as illustrated in FIGS. 1 and 2, the harness 35 includes a first extension portion 352 that curves rightward from the first connection portion 351 and extends in the vehicle width direction, a second extension portion 353 that curves rearward from the first extension portion 352 and extends rearward while passing above the suspension member 80, and a third extension portion 354 that curves in a U shape from the second extension portion 353, faces forward, then turns rightward, and communicates with the second connection portion 355.

In this way, since the harness 35 is routed between the first connection portion 351 and the second connection portion 355 while being curved in the vehicle width direction, it is possible to provide a sufficient margin length for the swinging of the harness 35.

As illustrated in FIG. 2, the first extension portion 352 of the harness 35 is fixed to an upper surface of the battery unit 30 via a first bracket 41. The second extension portion 353 of the harness 35 is fixed to an upper surface of the suspension member 80 via a second bracket 42. Since the harness 35 is fixed by the first bracket 41 and the second bracket 42 in the middle thereof, a position of the harness 35 is defined between the battery unit 30 and the rear drive unit 20, and the harness 35 is prevented from swinging more than necessary.

Next, the position in an up-down direction of the harness 35 between the battery unit 30 and the rear drive unit 20 will be described.

FIG. 3 is a cross-sectional view of a vicinity of the rear drive unit 20.

In FIG. 3, the cross member 85 is disposed above a space between the battery unit 30 and the rear drive unit 20. The cross member 85 is formed integrally with the floor panel 100.

The second extension portion 353 of the harness 35 is disposed to pass below the cross member 85 from the front to the rear of the vehicle. Here, the ground clearance of the inverter-side connector 26 of the rear drive unit 20 is set higher than that of the battery-side connector 31 of the battery unit 30.

In this way, when the positions of the inverter-side connector 26 and the battery-side connector 31 are different, positions of the first connection portion 351 of the harness 35 connected to the battery-side connector 31 and the second connection portion 355 of the harness 35 connected to the inverter-side connector 26 in the up-down direction are also different. With such a configuration, the harness 35 can be curved not only in the vehicle width direction but also in the up-down direction.

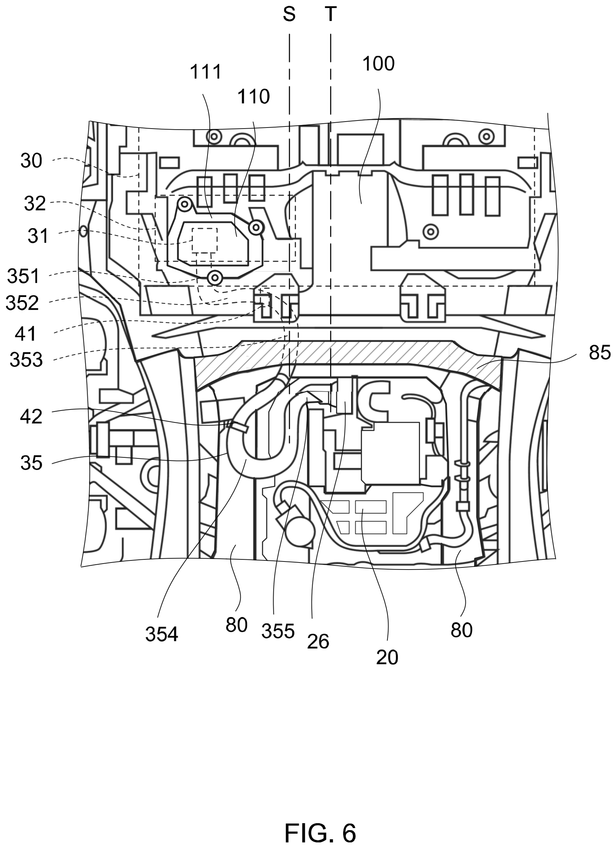

A position (indicated by S in FIG. 6) in the vehicle width direction at which the harness 35 passes through the cross member 85 is disposed, in the vehicle width direction, outward than the position (indicated by T in FIG. 6) in the vehicle width direction of the inverter-side connector 26 at which the harness 35 is connected to the inverter unit 21.

With such a configuration, even when a large load is input to the vehicle 1 during a collision or the like and the battery unit 30 and the rear drive unit 20 are in close proximity, the harness 35 can be prevented from being pinched by the cross member 85 and these structures, and the harness 35 can be suppressed from being damaged. Further, since the harness 35 is not disposed above the cross member 85, a vehicle cabin space above the cross member 85 is not sacrificed.

Next, the configurations of the first bracket 41 and the second bracket 42 will be described.

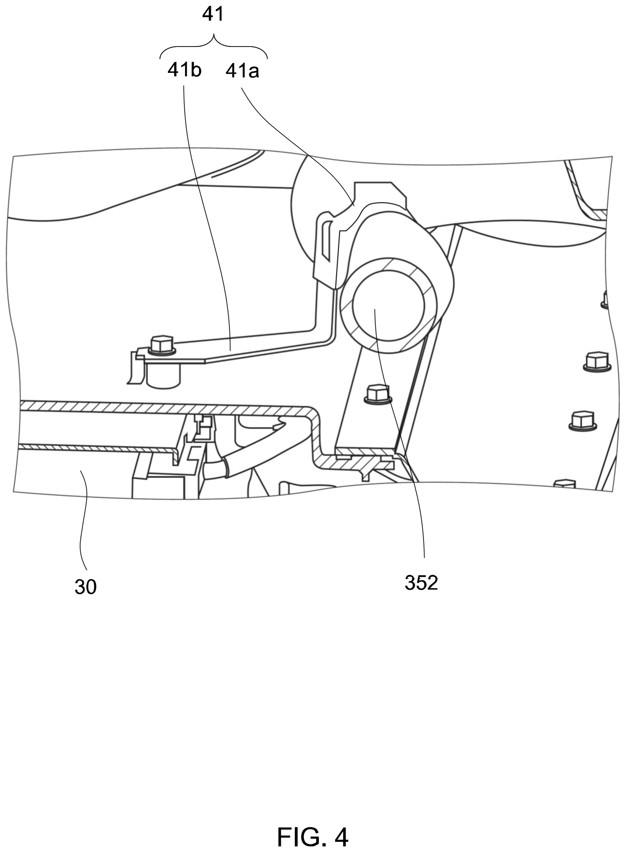

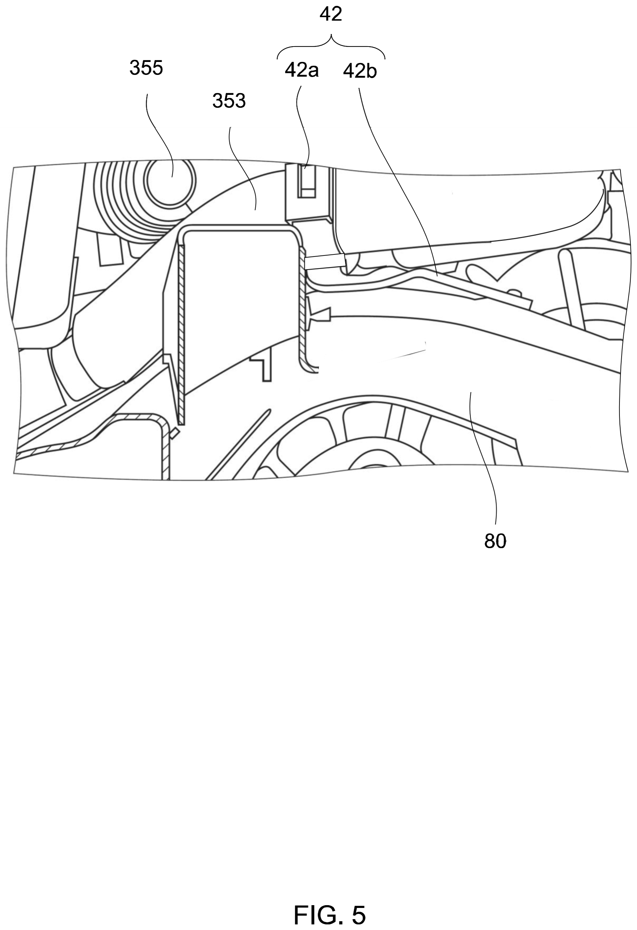

FIG. 4 is an explanatory diagram of a vicinity of the first extension portion 352 to which the first bracket 41 of the present embodiment is fixed, and FIG. 5 is an explanatory diagram of a vicinity of the second extension portion 353 to which the second bracket 42 is fixed.

As illustrated in FIG. 4, the first bracket 41 includes a support portion 41a that supports the first extension portion 352 of the harness 35, and a fixing portion 41b that is a plate-shaped member extending from the support portion 41a and is fixed to the battery unit 30. The support portion 41a is an annular member made of resin or the like. The support portion 41a supports the first extension portion 352 by being externally fitted onto the first extension portion 352. The fixing portion 41b is a long plate-shaped member made of metal or resin. One end of the fixing portion 41b is fixed to the upper surface of the battery unit 30, and the other end of the fixing portion 41b is fixed to the support portion 41a.

As illustrated in FIG. 5, the second bracket 42 includes a support portion 42a that supports the second extension portion 353 of the harness 35, and a fixing portion 42b that is a plate-shaped member extending from the support portion 42a and is fixed to the suspension member 80. The support portion 42a is an annular member made of resin or the like. The support portion 42a supports the second extension portion 353 by being externally fitted onto the second extension portion 353. The fixing portion 42b is a long plate-shaped member made of metal or resin. One end of the fixing portion 42b is fixed to the upper surface of the suspension member 80, and the other end of the fixing portion 42b is fixed to the support portion 42a.

In this way, since the first extension portion 352 of the harness 35 is fixed to the first bracket 41 and the second extension portion 353 of the harness 35 is fixed to the second bracket 42, the harness 35 is prevented from swinging more than necessary while securing a swinging margin of the harness 35.

Further, since the harness 35 is supported by the first bracket 41 and the second bracket 42 via the fixing portion 41b and the fixing portion 42b, which are long plate-shaped members, these members are elastically deformed to damp the swinging of the harness 35.

In addition, since the first bracket 41 and the second bracket 42 are fixed to the upper surface of the battery unit 30 and the upper surface of the suspension member 80, respectively, at least one of the support portion 42a and the fixing portion 42b of the second bracket 42 is configured at a position higher than at least one of the support portion 41a and the fixing portion 41b of the first bracket 41. With such a configuration, the harness 35 can be curved not only in the vehicle width direction but also in the up-down direction between the first bracket 41 and the second bracket 42 to which the harness 35 is fixed. A position of the first bracket 41 in the vehicle width direction is disposed to the right of a position of the second bracket 42 in the vehicle width direction.

Next, the configuration of the battery-side connector 31 of the battery unit 30 will be described.

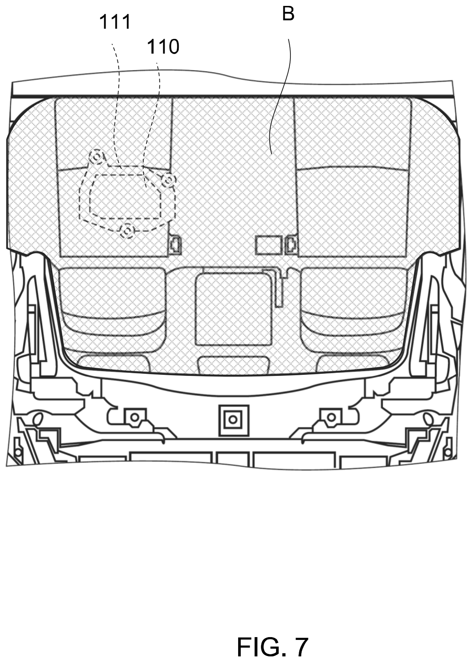

FIG. 6 is a top view of a vicinity of the rear drive unit 20 of the present embodiment, and FIG. 7 is a top view of a vicinity of a rear seat B in the vehicle cabin.

The battery-side connector 31 of the battery unit 30 is disposed on the erected portion 32 that is erected on the upper surface of the rear portion of the battery unit 30. As described above, since the space between the battery unit 30 and the rear drive unit 20 is not large, there is a problem that workability for removing the harness 35 is low during maintenance of the battery unit 30 and the rear drive unit 20.

Therefore, in the present embodiment, a service hole 110 capable of communicating with the battery unit 30 from the inside of the vehicle cabin is provided in the floor panel 100 located directly above the battery unit 30.

The service hole 110 is configured as an aperture communicating with the erected portion 32 from above the floor panel 100, which is located directly above the erected portion 32 of the battery unit 30 provided with the battery-side connector 31. The cover 111 is fixed to the service hole 110 by bolting.

As illustrated in FIG. 7, the service hole 110 is disposed such that a position thereof is under the rear seat B in the vehicle cabin. With such a configuration, in order to access the battery-side connector 31 of the erected portion 32, it is necessary to remove the rear seat B and remove a bolt of the cover 111, and an occupant of the vehicle 1 is prevented from inadvertently touching the harness 35 and the battery-side connector 31, which are high-voltage portions.

As described above, the vehicle 1 according to the embodiment of the present invention includes the rear drive unit 20 that drives the vehicle 1, and the battery unit 30 that supplies power to the rear drive unit 20 via the harness 35. The rear drive unit 20 is disposed on a vehicle rear side relative to the battery unit 30 and includes the drive motor 22 configured to drive the driving wheel 15 and the inverter unit 21 configured to convert power of the battery unit 30 and supply the converted power to the drive motor 22. The harness 35 includes one end configured as the first connection portion 351 that is connected to the battery unit 30 toward a vehicle front side at a rear portion of the battery unit 30, and the other end configured as the second connection portion 355 that is connected to the inverter unit 21 in a vehicle width direction at a side portion of the inverter unit 21. The harness 35 is routed to curve at least in the vehicle width direction between the first connection portion 351 and the second connection portion 355.

In this configuration, the harness 35 is connected toward the vehicle front side at the rear portion of the battery unit 30, and is connected in the vehicle width direction at the side portion of the rear drive unit 20. Accordingly, the harness 35 is routed to curve in the vehicle width direction using a space between the rear of the battery unit 30 and the side of the rear drive unit 20 in the vehicle width direction. As a result, since a harness length of the harness 35 can have a margin in the vehicle width direction between the battery unit 30 and the rear drive unit 20, stress applied to the harness 35 can be relieved even when the rear drive unit 20 swings.

In the present embodiment, the harness 35 includes the first extension portion 352 that curves from the first connection portion 351 and extends in the vehicle width direction, the second extension portion 353 that curves from the first extension portion 352 and extends toward the vehicle rear side, and the third extension portion 354 that curves from the second extension portion 353, extends in the vehicle width direction, and then reaches the second connection portion 355, the first extension portion 352 is fixed to the battery unit 30, and the second extension portion 353 is fixed to the rear drive unit 20.

In this configuration, since the harness 35 is routed while being curved between the first connection portion 351 and the second connection portion 355, curved portions of the harness 35 can be provided with a swinging margin.

In the present embodiment, the first extension portion 352 is fixed to the battery unit 30 via the first bracket 41, the second extension portion 353 is fixed to the rear drive unit 20 via the second bracket 42, and a position at which the first bracket 41 is fixed to the battery unit 30 and a position at which the second bracket 42 is fixed to the rear drive unit 20 are different in the vehicle width direction and a vehicle up-down direction.

In this configuration, since the harness 35 is routed between the first bracket 41 and the second bracket 42 while being curved not only in the vehicle width direction but also in the up-down direction, the harness 35 can be provided with a swinging margin.

In the present embodiment, the floor panel 100 of the vehicle 1 is disposed directly above the erected portion 32 of the battery unit 30 having the battery-side connector 31 to which the first connection portion 351 of the harness 35 is connected, the rear seat B is fixed above the floor panel 100, and the floor panel 100 has, below the rear seat B, the service hole 110 that opens to communicate with the erected portion 32 from above the floor panel 100.

In this configuration, since the service hole 110 for maintenance of the battery unit 30 and the rear drive unit 20 is provided below the rear seat B, an occupant of the vehicle 1 is prevented from inadvertently touching the harness 35 and the battery-side connector 31, which are high-voltage portions.

In the present embodiment, the vehicle 1 includes the cross member 85 between the battery unit 30 and the rear drive unit 20, the cross member extending in the vehicle width direction, the harness 35 is disposed between the battery unit 30 and the rear drive unit 20 to pass below the cross member 85, and a position where the harness 35 passes below the cross member 85 is outward of the second connection portion 355 in the vehicle width direction.

In this configuration, even when a large load is input to the vehicle 1 during a collision or the like and the battery unit 30 and the rear drive unit 20 are in close proximity, the harness 35 can be prevented from being pinched by the battery unit 30 and the rear drive unit 20, and the harness 35 can be suppressed from being damaged.

Although the embodiment and the modification of the present invention have been described above, the above embodiment and modification are merely a part of application examples of the present invention, and do not mean that the technical scope of the present invention is limited to the specific configurations of the above embodiment.

In the present embodiment, as illustrated in FIG. 1, the front drive unit 40 and the rear drive unit 20 are provided, but the present invention is not limited thereto. The present invention can also be applied to a vehicle that does not include the front drive unit 40 and travels only by the rear drive unit 20. In addition, in a vehicle including only the front drive unit 40 without including the rear drive unit 20, the front harness 45 connected to the front drive unit 40 and the battery unit 30 may be configured to be routed in a curved manner like the harness 35 described above.

## Claims

1. A harness attachment structure in a vehicle, the vehicle including a drive unit configured to drive the vehicle and a battery unit configured to supply power to the drive unit via a harness, wherein
the drive unit is disposed on a vehicle rear side relative to the battery unit and includes a drive motor configured to drive a driving wheel and an inverter unit configured to convert power of the battery unit and supply the converted power to the drive motor, and
the harness includes
one end configured as a first connection portion that is connected to the battery unit toward a vehicle front side at a rear portion of the battery unit, and
the other end configured as a second connection portion that is connected to the inverter unit in a vehicle width direction at a side portion of the inverter unit, and
is routed to curve at least in the vehicle width direction between the first connection portion and the second connection portion.

2. The harness attachment structure according to claim 1, wherein
the harness includes
a first extension portion that curves from the first connection portion and extends in the vehicle width direction,
a second extension portion that curves from the first extension portion and extends toward the vehicle rear side, and
a third extension portion that curves from the second extension portion, extends in the vehicle width direction, and then reaches the second connection portion,
the first extension portion is fixed to the battery unit, and
the second extension portion is fixed to the drive unit.

3. The harness attachment structure according to claim 2, wherein
the first extension portion is fixed to the battery unit via a first bracket,
the second extension portion is fixed to the drive unit via a second bracket, and
a position at which the first bracket is fixed to the battery unit and a position at which the second bracket is fixed to the drive unit are different in the vehicle width direction and a vehicle up-down direction.

4. The harness attachment structure according to claim 1, wherein
a floor panel of the vehicle is disposed directly above an erected portion of the battery unit having a battery-side connector to which the first connection portion of the harness is connected,
a seat is fixed above the floor panel, and
the floor panel has, below the seat, a service hole that opens to communicate with the erected portion from above the floor panel.

5. The harness attachment structure according to claim 1, wherein
the vehicle includes a cross member between the battery unit and the drive unit, the cross member extending in the vehicle width direction,
the harness is disposed between the battery unit and the drive unit to pass below the cross member, and
a position where the harness passes below the cross member is outward of the second connection portion in the vehicle width direction.
